Europäisches Patentamt

European Patent Office

Office européen des brevets

(11) Veröffentlichungsnummer: **0 252 228**
**A2**

## (12) EUROPÄISCHE PATENTANMELDUNG

(21) Anmeldenummer: **87105584.4**

(22) Anmeldetag: **15.04.87**

(51) Int. Cl.4: **G01N 27/04**

(30) Priorität: **05.07.86 DE 3622656**

(43) Veröffentlichungstag der Anmeldung:
**13.01.88 Patentblatt 88/02**

(84) Benannte Vertragsstaaten:
**DE FR GB**

(71) Anmelder: **DORNIER GMBH**
**Postfach 1420**
**D-7990 Friedrichshafen 1(DE)**

(72) Erfinder: **Kriechbaum, Gerhard, Dr.Dipl.-Ing.**
**Robert-Schumann Strasse 12**
**D-7778 Markdorf(DE)**
Erfinder: **Rahn, Johann Ulrich, Dipl.-Ing.**
**Sommerweg 15**
**D-7990 Friedrichshafen 24(DE)**
Erfinder: **Wirth, Peter, Dipl.-Ing.**
**Bildgarten Strasse 3**
**D-7990 Friedrichshafen 1(DE)**
Erfinder: **Knauber, Arno, Dipl.-Ing.**
**Ziegelstrasse 11**
**D-7990 Friedrichshafen 1(DE)**
Erfinder: **Löchter, Günter, Dipl.-Ing.**
**Hubenring 12**
**D-7990 Friedrichshafen 24(DE)**

(74) Vertreter: **Landsmann, Ralf, Dipl.-Ing.**
**Kleeweg 3**
**D-7990 Friedrichshafen 1(DE)**

(54) **Schadensermittlung bei Fasernverbundwerkstoffen.**

(57) Die Erfindung betrifft eine Vorrichtung zur Feststellung von Schäden an Faserverbundwerkstoffen, verbunden mit einer optischen und akustischen Signaleinrichtung und einer Schadensspeichereinrichtung und/oder einer Blockiereinrichtung, zur Verhinderung der weiteren Benutzung des beschädigten Bauteils. Der Schaden wird über Widerstands-oder Frequenzmessung festgestellt.

## Schadensermittlung bei Faserverbundwerkstoffen

Die Erfindung betrifft eine Vorrichtung zur Feststellung von Beschädigungen an Faserverbundwerkstoffen, vorzugsweise an Teilen von Fahr-oder Flugzeugen.

Im Fahrzeug-und Flugzeugbau werden verstärkt Primärstrukturbauteile aus Faserverbundwerkstoffen eingesetzt. Den Werkstoffen haftet aber ein entscheidender Nachteil an; es fehlen noch geeignete Fehlerüberwachungseinrichtungen. Diese sind aber gerade im Bereich der Luft-und Raumfahrt besonders wichtig. Risse oder Schädigungen durch Stoß sind durch optische Schadenserkennung von außen im Gegensatz zu metallischen Bauteilen oft nicht sichtbar. Oftmals haben sich im Innern des Bauteils die einzelnen Schichten getrennt, wodurch der Werkstoff aber an Stabilität erheblich verliert. Schläge und Stöße treten besonders nach Unterschreitung einer bestimmten Flughöhe und bei Landeanflug und Start auf, weil dort mit Steinschlag und Vogelschlag zu rechnen ist. Auch sich vom Reifen lösende Gummiteile können zu Beschädigungen, beispielsweise an den Landeklappen, führen.

Bekannt ist die Verwendung eines spröden Decklacks, der auf das Bauteil aufgetragen wird und bei Beschädigung abspringt, um die darunterliegende, andersgefärbte Lackschicht freizulegen, durch die der Ort der Beschädigung angezeigt wird. Dabei kann nicht gewährleistet werden, daß Pilot und Bodenpersonal den Schaden oder das Ausmaß des Schadens erkennen und einen neuen Start verhindern können.

Bekannt aus der Flug Revue 5/86, Seite 83 ff ist die Verwendung von Lichtleitfasern zur Überwachung und Kontrolle von Faserverbundstoff-Strukturen. Dabei ist aber der Aufwand an benötigten, teuren Lichtleitfasern groß. Ebenso ist die Bruchgefahr der Fasern durch noch zulässige Beanspruchung hoch. Schäden werden angezeigt, sobald ein Riß der Leitfaser erfolgt. Findet jedoch eine elastische Verformung statt, die keine Schadensnachwirkung hat, so führt auch dies zur Durchtrennung der Fasern und somit zur Schadensmeldung. Es muß eine Reparatur vorgenommen werden, obwohl kein bleibender Schaden vorliegt.

Ebenfalls bekannt ist eine Schadensfeststellung mit Dehnungsmeßstreifen.

So beschreibt die DE-PS 832 689 die Herstellung eines Dehnungsmeßstreifens, der in gespulter Form vorliegt. Eine genaue Feststellung von Rissen des Streifens und eine genaue Lokalisierung des Schadens ist mit sporadisch aufgeklebten gespulten Meßstreifen jedoch kaum möglich. Auch die DE-AS 1 573 927 beschreibt eine Vorrichtung zur Bestimmung von Restspannungen in Werkstücken großer Stärke durch eine dreiachsige Druckmessung, bei der Meßgeber in zwei senkrecht aufeinanderstehenden Ebenen vorgesehen sind. Dabei wird besonderer Wert darauf gelegt, daß das zu prüfende Werkstück dick ist und aus Metall besteht, da aus dem Gesamtwerkstück eine Probe herausgebohrt wird. Eine Messung und Erkennung elastischer Verformungen ist damit nicht möglich, da nur eine bleibende Veränderung erkennbar ist. Bei Faserverbundwerkstoffen läßt sich eine derartige Vorrichtung nicht anwenden, ohne zu einer vollständigen Unbrauchbarkeit des Werkstoffes zu führen.

So beschreibt auch die DE-AS 1 129 728 einen Dehnungsmeßstreifen, der in einem Isoliermaterial eingebettet ist, das wiederum von einem Metallmantel umgeben ist. Die meßbaren Spannungen sind auch hier auf einen bestimmten Bereich beschränkt, den Bereich, an dem der Metallmantel am zu prüfenden Werkstück befestigt ist. Als zu prüfende Werkstücke kommen lediglich solche aus Metall in Frage. Eine flächendeckende Prüfung oder eine Prüfung von Faserverbundwerkstoffen läßt sich damit nicht durchführen.

Der Erfindung liegt die Aufgabe zugrunde, eine Vorrichtung zu schaffen, die gewährleistet, daß ein aufgetretener unzulässiger Schaden an einem Faserverbundwerkstoffteil registriert und gemeldet wird, und daß sichergestellt ist, daß ein Fahr-oder Flugzeug ohne Schadensbehebung nicht weiter benutzt wird.

Die Aufgabe wird durch die Erfindung nach Hauptanspruch und Unteransprüchen gelöst.

Beim Laminieren der Faserverbundwerkstoffschichten wird ein Drahtgeflecht mit eingebracht. Dabei kann das Drahtgeflecht innerhalb, auf der Außenseite oder auf der Innenseite des Werkstoffteils liegen. Es bietet sich vorzugsweise an, das Geflecht zwischen zwei Schichten des Faserverbunds einzubringen. Bei der geometrischen Gestaltung des Drahtgeflechts können die Drähte parallel liegen, sich im rechten oder einem anderen Winkel schneidend übereinanderliegen oder verflochten sein, oder in anderen denkbaren Ausgestaltungsformen vorliegen.

Ein Verbundwerkstoffteil kann von mehreren getrennten Drahtgeflechten durchzogen sein. Dann ist die Anzahl der Geflechte maßgeblich für die Genauigkeit der Lokalisierung eines Schadens. Die Drehtgeflechte sind in unterschiedlichen Schaltungsanordnungen verwendbar:

(a) Reihenschaltung
b) Parallelschaltung
c) gemischte Schaltung aus a) und b).

Die Reihenschaltung von Drahtgeflechten bewirkt eine Anzeige bereits bei relativ kleinen Schäden. Bei Beschädigung eines Drahtgeflechts steigt der gesamte Widerstand der Schaltung auf ∞.

Die Parallelschaltung bewirkt bei einem Schaden nur eine geringe Widerstandserhöhung. Dadurch ist eine Abschätzung der Schadensgröße möglich; je größer der gemessene Widerstand, desto größer die beschädigte Fläche.

Durch die Kombination beider Schaltungen läßt sich eine differenzierte Schadensanalyse ermöglichen.

Die so geschalteten Geflechte werden mit einem Widerstandsmeßgerät verbunden. Durch Veränderung des Widerstandes aufgrund einer Beschädigung spricht eine Signaleinrichtung an.

Diese kann optisch oder akustisch sein, oder kombiniert optisch-akustisch, beispielsweise eine rote Lampe und eine Hupe. Zur späteren Dokumentation, zeitlichen Zuordnung und verbesserten Inspektion durch das Bodenpersonal, können die aufgetretenen Schäden auf einer Speichereinrichtung aufgezeichnet werden. Als Speichereinrichtung kann ein Bandspeicher, ein Computerspeicher, oder auch der angeschlossene Flugschreiber dienen. Bei zu großer Widerstandsänderung, also einem Schaden, der über einem erlaubten Grenzwert liegt, kann auch automatisch durch eine Blockade, beispielsweise die Unterbrechung von Stromkreisen, verhindert werden, daß das beschädigte Faserverbundwerkstoffteil weiter benutzt wird.

Die Vorrichtung kann so ausgelegt sein, daß die Meßeinheit erst eingeschaltet wird, oder sich automatisch einschaltet, wenn eine Gefährdung durch Schlag-oder Stoßschäden zu erwarten ist. Das ist beispielsweise gegeben nach Unterschreiten einer kritischen Höhe oder unter Vereisungsbedingungen. Eine besondere Gefahr besteht bei Start und Landung durch aufgewirbelte Steine und durch abfliegende Bruchstücke der Gummibereifung oder gar Teilen zerplatzter Reifen. Ebenso kritische Bereiche sind die Flugbereiche, in denen mit Hagelschlag und Vereisungen zu rechnen ist und mit dem damit verbundenen Wegfliegen abgeplatzter Eisstücke. Die optische oder akustische Signaleinrichtung kann direkt nach Eintritt des Schadensfalls anzeigen, oder aber erst bei einem Check des Piloten oder Fahrzeugführers. Es ist auch möglich, die optische Signaleinrichtung so zu gestalten, daß auf einem Bildschirm die beschädigte Stelle eines Flug-oder Fahrzeugs oder eines seiner Teile direkt angezeigt wird. Die beschädigten Stellen sollen dann bei gravierenden Schäden vom Bodenpersonal vor einem neuen Start behoben werden.

Als weitere Schadenserkennungsmethode wird neben der elektrischen Widerstandsmessung eine Frequenzmessung und -analyse vorgeschlagen. Dabei wird an einem Faserverbundwerkstoffteil, auch gegebenenfalls nur in der kritischen Flugphase, eine Eigenfrequenzmessung vorgenommen. Frequenzen, die unterhalb einer festgelegten Grenzfrequenz liegen, werden abgeschnitten und die durch Schläge und Stöße hervorgerufenen impulsartigen Amplitudenüberhöhungen werden von Beschleunigungsgebern detektiert und anschließend angezeigt. Über die Höhe der registrierten Amplitudenspitze ist eine Aussage über die Kraft des Einschlags und die resultierende Schadenshöhe möglich.

Die Erfindung wird anhand von Figuren näher erläutert.

Es zeigen:

Figur 1 drei Drahtgeflechtsvariationen,

Figur 2 Parallel-und Reihenschaltung,

Figure 3 Frequenzspektrum mit impulsartiger Überhöhung.

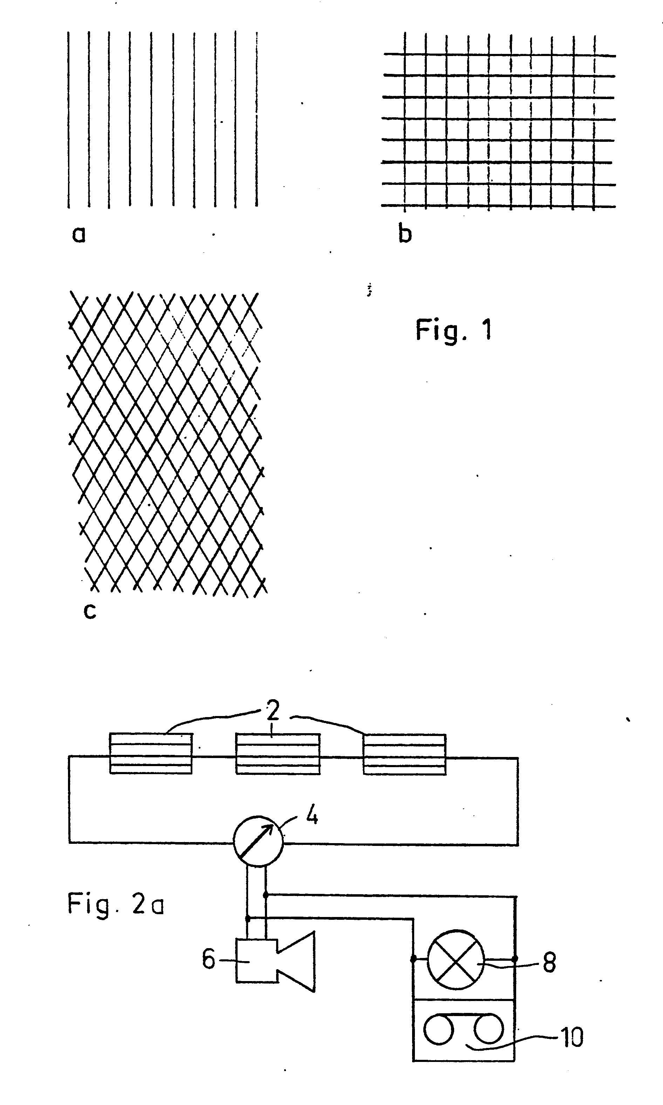

Figur 1 zeigt drei Variationen der Drahtgeflechte

    a) parallele Drähte,

    b) rechtwinklig verlegte Drähte,

    c) rautenförmig verlegte Drähte.

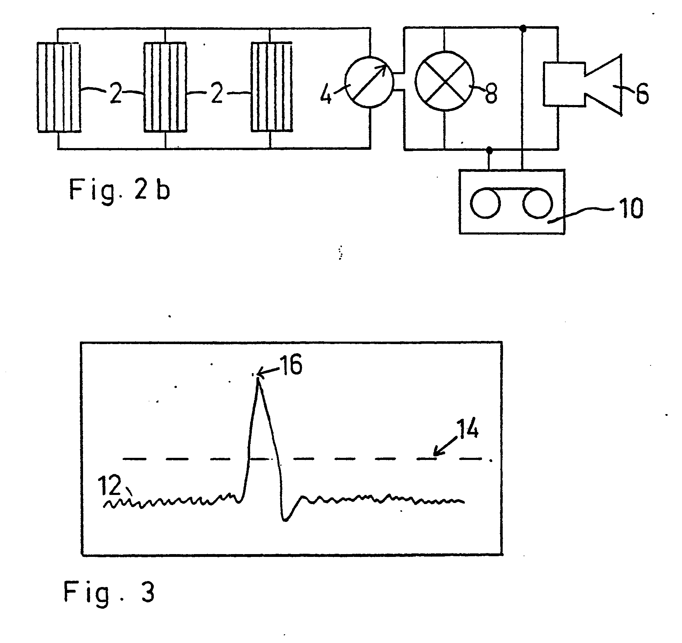

Figuren 2a und b zeigen die Parallel-und Reihenschaltung von drei Drahtgeflechten 2. Der Widerstand wird mit Meßgerät 4 gemessen. Damit gekoppelt ist eine Hupe 6 als akustische eine Lampe 8 als optische Signaleinrichtung und eine Speichereinrichtung 10 zur Aufzeichnung der registrierten Schäden.

Figur 3 zeigt einen Ausschnitt aus einem Frequenzspektrum mit dem Band der Eigenfrequenz 12 und dem angesetzten Amplitudengrenzwert 14. Die Spitze 16 zeigt eine über den Grenzwert hinausgehende Amplitudenüberhöhung. Diese Überhöhung ist durch einen auf das Bauteil auftreffenden Gegenstand ausgelöst worden.

**Ansprüche**

1. Vorrichtung zur serienmäßigen Feststellung von Beschädigungen an Faserverbundwerkstoffteilen, vorzugsweise an Teilen von Fahr-und Flugzeugen, **dadurch gekennzeichnet** , dass Widerstandsdrahtgebilde (2) auf der Außenseite, auf der Innenseite oder innerhalb, vorzugsweise innerhalb, des Faserverbundwerkstoffteils flächendeckend angeordnet sind und eine zur Feststellung - schadensbedingter elektrischer Widerstandsänderungen mit einem elektrischen Widerstandsmeßgerät (4) gekoppelte Anzeigevorrichtung (6, 8) vorgesehen ist.

2. Vorrichtung zur serienmäßigen Feststellung von Beschädigungen an Faserverbundwerkstoffteilen, vorzugsweise an Teilen von Fahr-und Flugzeugen, **dadurch gekennzeichnet**, dass ein Schwingungsmeß sensor, beispielsweise ein Beschleunigungsgeber, und eine damit gekoppelte Anzeigevorrichtung zur Feststellung - schadensbedingter Überschreitungen (16) eines Amplitudengrenzwertes (14) während des Betriebs auftretender Schwingungen (12) innerhalb des Faserverbundwerkstoffteils vorgesehen sind.

3. Vorrichtung nach Anspruch 1, dadurch gekennzeichnet, dass sie zur Verhinderung einer weiteren Benutzung des Faserverbundwerkstoffteils wegen der Überschreitung der Elastizitätsgrenze oder wegen Durchtrennung der Drahtgebilde (2) vorgesehen ist.

4. Vorrichtung nach Anspruch 2, dadurch gekennzeichnet, dass sie zur Verhinderung einer weiteren Benutzung des Faserverbundwerkstoffteils wegen der Überschreitung des Amplitudengrenzwertes (14) vorgesehen ist.

5. Vorrichtung nach einem der Ansprüche 1 oder 2, dadurch gekennzeichnet, dass die Anzeigevorrichtung eine optische (8) oder akustische (6) Signaleinrichtung ist.

6. Vorrichtung nach einem der Ansprüche 1 oder 2, dadurch gekennzeichnet, dass die Meßeinrichtungen dauernd oder nur im für Schlag- und Stoßbeschädigungen kritischen Fahr-und Flugbereich, beispielsweise in der Start-und Landephase, eingeschaltet sind.

7. Vorrichtung nach einem der Ansprüche 1 oder 2, dadurch gekennzeichnet, dass die Meßeinrichtungen in den kritischen Fahr-und Flugbereichen automatisch eingeschaltet sind.

8. Vorrichtung nach einem der Ansprüche 1 oder 2, dadurch gekennzeichnet, dass die registrierten Beschädigungen auf einem angeschlossenen Speichermedium (10) aufzeichenbar sind.

9. Vorrichtung nach Anspruch 8, dadurch gekennzeichnet, dass die aufgezeichneten Daten jederzeit oder nur bei Bedarf auch vom Bodenpersonal abrufbar sind.

10. Vorrichtung nach einem der Ansprüche 1 oder 2, dadurch gekennzeichnet, dass die Drahtgebilde (2) direkt bei der Herstellung der Faserverbundwerkstoffteile an oder in diesen anordenbar sind.

a

b

Fig. 1

c

Fig. 2a

**Fig. 2 b**

2      2      4      8      6

10

**Fig. 3**

16

14

12